# EUROPEAN PATENT APPLICATION

(11) **EP 2 172 314 A1**
(43) Date of publication of application: **07.04.2010**
(21) Application number: 08777263.8
(22) Date of filing: 17.06.2008
(51) Int. Cl.: B25J 15/08, B23P 21/00

(54) **WORK HOLDING APPARATUS AND METHOD FOR SETTING UP ASSEMBLY**

(30) Priority: 20.06.2007 JP 2007162880; 20.06.2007 JP 2007162881; 20.06.2007 JP 2007162882
(71) Applicant: Honda Motor Co., Ltd., Minato-ku Tokyo 107-8556 (JP)
(72) Inventor: TAKITA, Youichi, Hagagun Tochigi 321-3395 (JP); AIDA, Zenichi, Hagagun Tochigi 321-3395 (JP)
(74) Representative: Quinterno, Giuseppe
(86) International application number: PCT/JP2008/061025
(87) International publication number: WO 2008/156072

(57) **Abstract**

Provided is a work holding apparatus, which can be set up at low cost, for an assembly configured by stacking a plurality of components. A holding apparatus (30) is provided with a plurality of cylindrical collets (31) arranged in a row; a plurality of cylindrical pieces (32) arranged between the collets (31); and a pressurizing apparatus (33), which is inserted into the collets (31) and the pieces (32) and applies pressure by sandwiching the collets (31) and the pieces (32) from the both end sides. The outer diameter of the piece (32) is larger than the inner diameter of the collet (31) at the center, becomes smaller toward the both ends from the center, and is smaller than the inner diameter of the collet (31) at the both ends.

## Description

### TECHNICAL FIELD

The present invention relates to a work holding apparatus and a method for setting up an assembly thereof. More specifically, the present invention relates to a work holding apparatus used for setting up an assembly configured by stacking a plurality of components and a method for setting up the assembly.

### BACKGROUND ART

Conventionally, a front fork assembly that is a front wheel portion of a motorcycle has been constituted of components such as a pair of forks, a stem, a wheel, a brake panel and an axle. Of these components, the fork, the stem, the wheel and the brake panel are formed with a through hole, respectively.

The front fork assembly is set up, for example, according to the following steps, as disclosed in Patent Document 1.

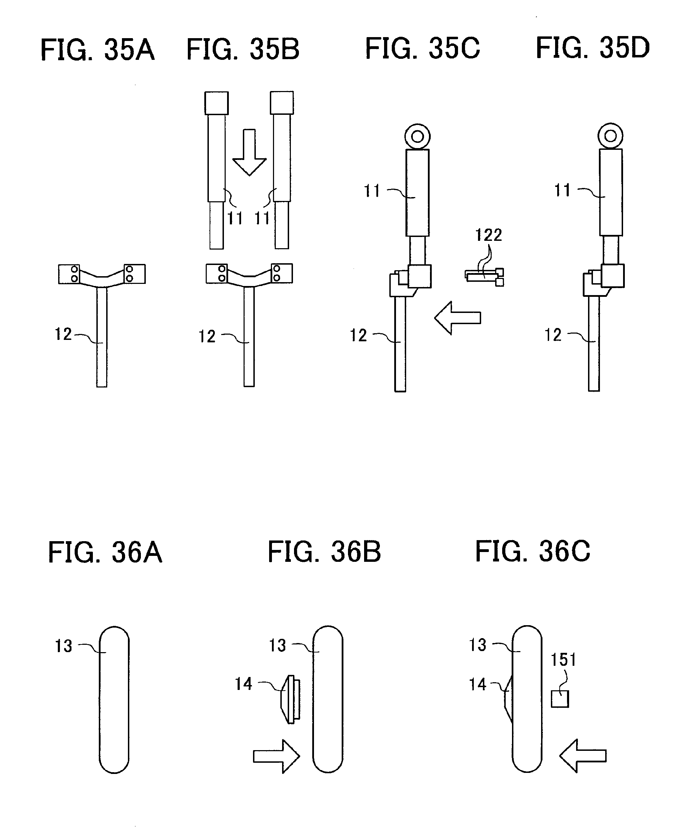

That is, first, as shown in Fig. 35A, a stem 12 is assembled (ST1). Under a state where the stem 12 is made to stand, a fork 11 is inserted into an insertion hole in the stem 12 (ST2) as shown in Fig. 35B. As shown in Fig. 35C, the fork 11 is fastened with a bolt 122 to be fixed to the stem 12 for assembly (ST3). In this way, the pair of forks 11 is disposed in parallel. As shown in Fig. 35D, the assembly is conveyed to another station (ST4).

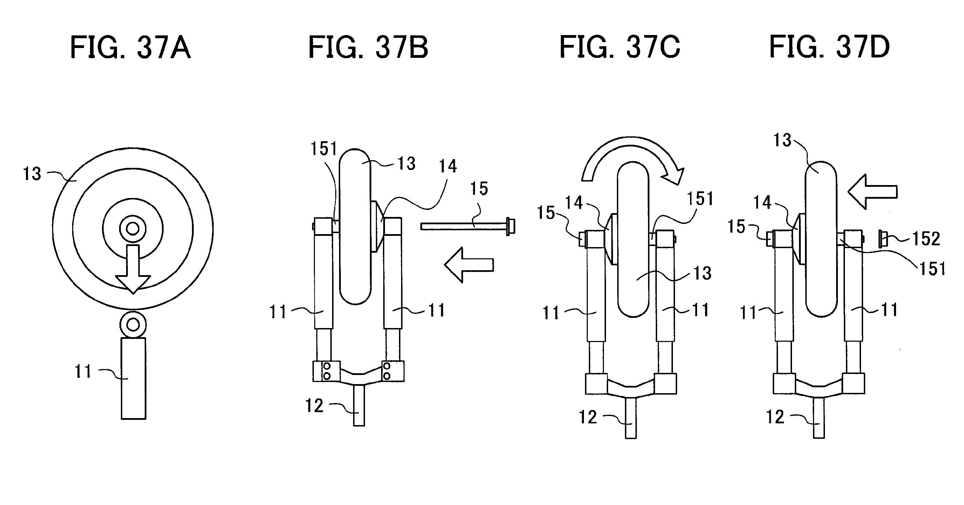

On the other hand, as shown in Fig. 36A, a wheel 13 is prepared (ST5) and, as shown in Fig. 36B, after a brake panel 14 is attached onto the wheel 13 (ST6), a collar 151 is attached for assembly (ST7), as shown in Fig. 36C. As shown in Fig. 37A, the assembled wheel 13 is disposed between the pair of assembled forks 11 (ST8). Next, as shown in Fig. 37B, an axle 15 is inserted into insertion holes in the pair of forks 11, the wheel 13 and the brake panel 14, and the collar 151 (ST9). Subsequently, as shown in Fig. 37C, the assembly is inverted (ST10) and, as shown in Fig. 37D, a nut 152 is fastened to fix the axle 15 (ST11).

According to this method, components can be securely attached in each process, and thus easy division of labor can be attained for each process and a part of a work process can be automated, thereby facilitating set-up of a front fork assembly.
Patent Document 1: Japanese Patent No. 2773754

### DISCLOSURE OF THE INVENTION

### Problems to be Solved by the Invention

However, the above-described method requires equipment for inserting an axle into a wheel and a fork, and equipment for positioning the wheel and the fork. Accordingly, a wide space becomes required and an equipment cost increases.

To solve the foregoing problems, the inventors focused their attention on a structure in which a fork, a wheel and a brake panel among the components of the above front fork assembly are stacked and an axle is inserted thereinto.

It is an object of the present invention to provide a work holding apparatus and a method for setting up an assembly, capable of setting up the assembly constructed by stacking a plurality of components at low cost. Means for Solving the Problems

A work holding apparatus (for example, a holding apparatus 30 described later) according to the present invention includes: a plurality of collets of cylindrical shape arranged in a row (for example, collets 31 described later); a plurality of pieces of cylindrical shape (for example, pieces 32 described later) arranged between the plurality of collets; and a pressurizing means (for example, a pressurizing apparatus 33 described later) that is inserted into the plurality of collets and the plurality pieces, and that applies a pressure from both end sides to sandwich the collets 31 and the pieces 32, in which the outside diameter of the piece is larger than the inside diameter of the collet in the center, becomes smaller from the center thereof toward both ends, and is smaller than the inside diameter of the collet at both ends.

According to the present invention, a work formed with a hole is held in the following steps.

That is, a plurality of collets is arranged in a row, and pieces are arranged between the collets. The pieces are smaller than an inside diameter of the collets at both end portions thereof; therefore, both ends of the pieces penetrate to inside of the collets.

First, in a state not pressurized, by a pressurizing means, a work holding apparatus is inserted into a hole of a work, and a collet is positioned inside the hole of the work. Since the collet is not expanded in this state, the collet can be smoothly inserted into the hole of the work.

Next, upon pressurization by the pressurization means, each of two pieces positioned on both sides of each of the collets moves forward toward the inside of the collets, and a clearance between the pieces adjacent to each other becomes shorter. As a result, since the outside diameter of the central portion of the piece is larger than the inside diameter of the collet, the inner wall surface of the collet is expanded and opened, and thus the collet is elastically deformed and the outside diameter thereof is expanded.

Accordingly, the collet presses the inner wall surface of the hole of the work, so that the work is held by a frictional force between the inner wall surface of the hole of the work and the outer-peripheral surface of the collet.

Subsequently, when pressurization by the pressurizing means is released, the inner wall surface of the collet presses the piece by a restoring force of elastic deformation of the collet, so that the piece retracts toward the outside of the collet and the outside diameter of the collet shrinks to return to the original outside diameter. Thus, a pressing force of the collet against the inner wall surface of the hole of the work is released, so that the work can be released.

In the present invention, each collet independently executes the operation, and thus a plurality of works arranged to be stacked can be held concurrently. In addition, a work can be held firmly by using the collets, compared to a conventional rubber tube. Furthermore, even if the inside diameters of the holes of works are different from each other, the works can be securely held, and it is possible to attain a simple configuration and low cost since the work holding apparatus is constructed from collets, pieces and a pressurizing means. Accordingly, use of the work holding apparatus allows for an assembly formed of a plurality of stacked components to be set up at low cost.

According to the present invention, in a method for setting up a front fork assembly (for example, a front fork assembly 10 described later) having a pair of forks (for example, a fork 11 described later), a stem (for example, a stem 12 described later) for fixing the pair of forks to be substantially parallel, a wheel (for example, a wheel 13 described later) to be disposed between the pair of forks, an axle (for example, an axle 15 described later) for rotatably mounting the wheel on the fork, the method includes: a step of disposing the pair of forks to be substantially parallel, while disposing the wheel between the pair of forks, and mounting the wheel on the pair of forks by the axle; and a step of mounting the pair of forks on the stem.

According to the present invention, first, the forks are disposed to be substantially parallel, a wheel is disposed between the pair of forks, and the wheel is mounted to the forks by an axle. Subsequently, the forks are mounted to the stem.

Accordingly, by mounting the wheel to the forks before the forks are mounted to the stem, a relative position between the wheel and the forks is adjusted with high precision, thereby increasing work efficiency.

In addition, when mounting the wheel to the forks, since it is possible to set up by stacking into a state in which components such as the wheel and the forks are made to be substantially horizontal, the number of times a set-up orientation is changed can be minimized as much as possible, thereby attaining a simple equipment configuration in executing automatic set-up and cost reduction.

According to the present invention, in a method for setting up an assembly (for example, a front fork assembly 10 described later) configured by stacking from a first component positioned at a top stage (for example, a right fork 11A described later) to an (n)th component positioned at a bottom stage (for example, a left fork 11B described later), n being an integer of at least 2, the method includes: a first step of holding a first component by way of a conveyance means; and an (m)th step of holding an m-th component in a state where the first to (m-1)th components are held, m being an integer of at least 2, in which set-up states of the assembly are achieved in sequence by repeating the (m)th step until (m) changes from a value of 2 to be equal to (n).

According to the present invention, first, the conveyance means holds a first component. Next, the conveyance means holds a second component in a state where the first component is held. Next, the conveyance means holds a third component in a state where the first to second components are held. Subsequently, the conveyance means holds a fourth component under a state where the first to third components are held. Such operations are repeated until a component at a bottom stage has been held.

Accordingly, for set-up of an assembly, set-up states of an assembly can be achieved by only sequentially moving the conveyance means from the first component to the (n)th component. Thus, use of conventional equipment for mutually positioning a set-up station and components can be eliminated and set-up can be executed with one conveyance means, thereby attaining a reduction in equipment cost and effective space utilization.

### Effects of the Invention

According to the present invention, respective collets can operate independently, thereby enabling to concurrently hold a plurality of stacked works. A work can be held firmly by using the collets, compared to a conventional rubber tube. Furthermore, even if the inside diameters of holes in works are different from each other, the works can be completely held. Since the work holding apparatus is constituted of collets, pieces and a pressurizing means, the work holding apparatus can be made simple in configuration and at low cost. Accordingly, use of the work holding apparatus allows for an assembly constituted of a plurality of stacked components to be set up at low cost.

According to the present invention, by mounting the wheel on the forks before the forks are mounted on the stem, a relative position between the wheel and the forks can be adjusted with high precision, thus increasing work efficiency. Furthermore, when mounting the wheel on the fork, since components such as the wheel and the forks are stacked to be substantially parallel for set-up, the number of times a set-up orientation is changed can be minimized as much as possible, thereby attaining a simple equipment configuration for automatic set-up.

According to the present invention, set-up of an assembly can be executed, since set-up states of an assembly are sequentially achieved by only sequentially moving the conveyance means from the first component to the (n)th component. Accordingly, use of conventional equipment for mutually positioning a set-up station and components can be eliminated and set-up can be executed, using one conveyance means, thereby attaining cost reduction and effective space utilization.

### BRIEF DESCRIPTION OF THE DRAWINGS

Fig. 1 is a perspective view showing a schematic configuration of a holding apparatus to which a work holding apparatus according to a first embodiment of the present invention is applied;
Fig. 2 is a side view of the holding apparatus according to the first embodiment;
Fig. 3 is an exploded perspective view and a sectional view of a part of the holding apparatus according to the first embodiment;
Fig. 4 is a view showing a state where a pressurizing force is applied to the holding apparatus according to the first embodiment;
Fig. 5 is a view showing a state where a pressurizing force is applied toward one collet of the holding apparatus according to the first embodiment;
Fig. 6 is a view showing an expanding state toward one collet of the holding apparatus according to the first embodiment;
Fig. 7 is a view showing a state before three stacked works are held with the holding apparatus according to the first embodiment;
Fig. 8 is a view showing a state where a work at a lower stage is held with the holding apparatus according to the first embodiment;
Fig. 9 is a view showing a state where works at lower and a middle stages are held with the holding apparatus according to the first embodiment;
Fig. 10 is a view showing a state where all works are held with the holding apparatus according to the first embodiment;
Fig. 11 is a view showing a state after all works are held with the holding apparatus according to the first embodiment;
Fig. 12 is an exploded perspective view of a front fork assembly to be set up by way of a method for setting up a front fork assembly according to a second embodiment of the present invention;
Fig. 13 is a view illustrating a step of assembling a wheel and a fork of a front fork assembly according to the second embodiment;
Fig. 14 is a view illustrating a step of mounting an assembled fork according to the second embodiment on a stem;
Fig. 15 is a view illustrating steps of fixing the fork according to the second embodiment on the stem;
Fig. 16 is an exploded perspective view of a front fork assembly to be set up by way of a method for setting up an assembly according to a third embodiment of the present invention;
Fig. 17 is a plan view of a set-up apparatus for setting up the front fork assembly according to the third embodiment;
Fig. 18 is a sectional view of an axle lift mechanism configuring the set-up apparatus according to the third embodiment;
Fig. 19 is a sectional view of the holding apparatus configuring the set-up apparatus according to the third embodiment;
Fig. 20 is a side view of the holding apparatus according to the third embodiment;
Fig. 21 is an exploded perspective view of a part of the holding apparatus according to the third embodiment;
Fig. 22 is a sectional view showing a state where a pressurizing force is applied to a collet and a piece according to the third embodiment;
Fig. 23 is a sectional view showing a state where the collet according to the third embodiment is expanding;
Fig. 24 is a perspective view illustrating an operation of the holding apparatus configuring the front fork assembly according to the third embodiment;
Fig. 25 is a view showing a state where an assembly is set at the axle lift mechanism according to the third embodiment;
Fig. 26 is a sectional view showing a state where an axle is inserted into an assembly with the axle lift mechanism according to the third embodiment;
Fig. 27 is a side view showing a state where a right fork configuring the front fork assembly according to the third embodiment is held;
Fig. 28 is a side view showing a state where the right fork and a collar of the front fork assembly according to the third embodiment are held;
Fig. 29 is a side view showing a state where the right fork, the collar and a wheel configuring the front fork assembly according to the third embodiment are held;
Fig. 30 is a side view showing a state where the right fork, the collar, the wheel and a brake panel configuring the front fork assembly according to the third embodiment are held;
Fig. 31 is a side view showing a state where the right fork, the collar, the wheel, the brake panel and a left fork configuring the front fork assembly according to the third embodiment are held;
Fig. 32 is a side view showing a state where the axle is inserted into an assembly configuring the front fork assembly according to the third embodiment;
Fig. 33 is a side view showing a state where a stem is mounted on the assembly configuring the front fork assembly according to the third embodiment;
Fig. 34 is a side view showing a state where the front fork assembly according to the third embodiment is completed;
Fig. 35 is a view illustrating a step of assembling a fork and a stem of a front fork assembly according to a conventional example of the present invention;
Fig. 36 is a view illustrating a step of assembling a wheel of the front fork assembly according to the conventional example; and
Fig. 37 is a view illustrating steps of mounting the assembled wheel according to the conventional example on an assembled fork.

### EXPLANATION OF REFERENCE NUMERALS

- 10: front fork assembly (assembly)
- 11: fork
- 11A: right fork (first component)
- 11B: left fork (fifth component)
- 12: stem
- 13: wheel (third component)
- 14: brake panel (forth component)
- 15: axle
- 22: conveyance apparatus (conveying means)
- 30: holding apparatus (work holding apparatus)
- 31,: 31A, 31B, 31C, 31D collets
- 32,: 32A pieces
- 33: pressuring apparatus
- 151: collar (second component)

### PREFERRED MODE FOR CARRYING OUT THE INVENTION

Each embodiment of the present invention will be described with reference to the accompanying drawings.

### First Embodiment

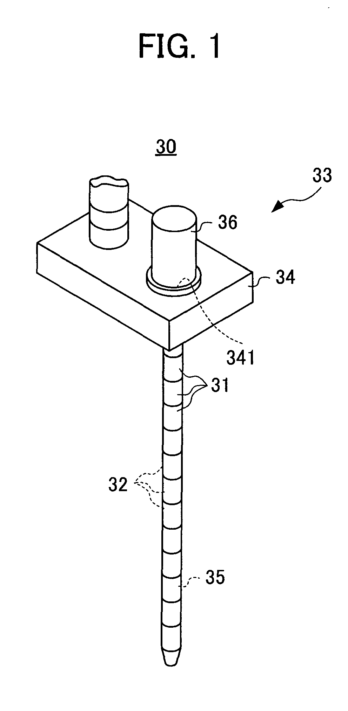

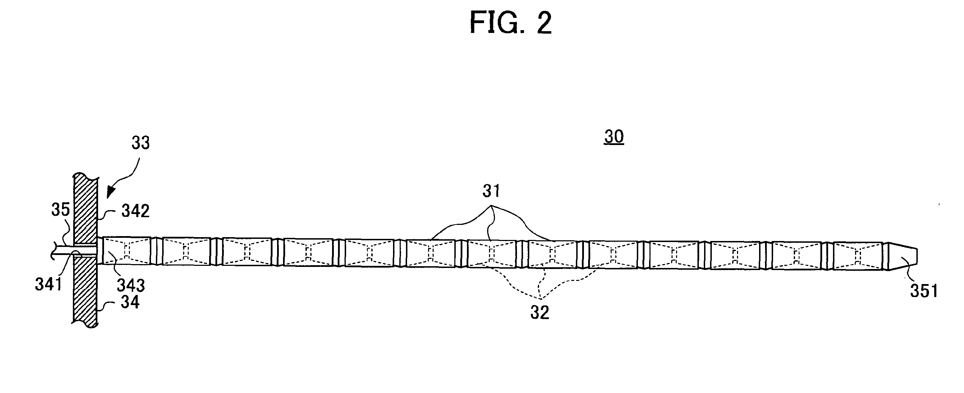

Fig. 1 is a perspective view showing a schematic configuration of a holding apparatus 30 to which a work holding apparatus according to a first embodiment of the present invention is applied. Fig. 2 is a side view of the holding apparatus 30.

The holding apparatus 30 is a robot hand and is mounted on a front end of an arm (not shown) which can change a posture and a position in a 3D space of the holding apparatus 30.

The holding apparatus 30 is provided with a plurality of collets 31 of cylindrical shape arranged in a row, a plurality of pieces 32 of cylindrical shape arranged between the plurality of collets 31, and a pressurizing apparatus 33 as a pressurizing means that applies a pressure from both end sides to sandwich the collets 31 and the pieces 32.

The plurality of collets 31 are arranged so that central axes thereof are coaxial to one another and the pieces 32 are arranged between the collets 31 so that central axes thereof are coaxial to the collets 31. That is, the collets 31 and the pieces 32 are alternately arranged in line.

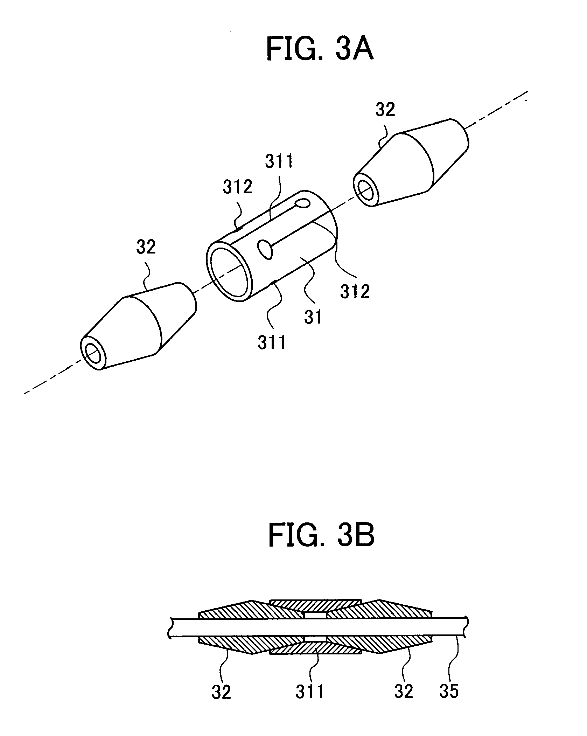

Fig. 3A is an exploded perspective view of a part of the holding apparatus 30. Fig. 3B is a sectional view of a part of the holding apparatus 30.

Slits 311 from a vicinity of one end edge to the other end edge and slits 312 from a vicinity of the other end edge to one end edge are alternately formed in the collets 31.

The outside diameter of the piece 32 is larger than the inside diameter of the collet 31 in the center, becomes smaller from the center thereof toward both ends and is smaller than the inside diameter of the collet 31 at both ends. Sine both ends of the piece 32 are smaller than the inside diameter of the collet 31, both ends of the piece 32 are in such a state as to penetrating into the collet 31.

Again referring to Figs. 1 and 2, the pressurizing apparatus 33 is provided with a holding flange 34 supported by an arm and formed with a through-hole 341, a collet 31 inserted into the through-hole 341, a pressurizing pin 35 inserted into the piece 32, and an actuator 36 mounted on the holding flange 34 and advancing/retracting the pressurizing pin 35.

The holding flange 34 is provided with a flat plate 342 and a first pressurizing portion 343 integrally formed in the center of the plate 342. The first pressurizing portion 343 has the shape of half of the piece 32. That is, the outside diameter of the first pressurizing portion 343 is larger than the inside diameter of the collet 31 on the plate 342 side, becomes smaller toward the front end portion and is smaller than the inside diameter of the collet 31 at the front end portion.

The through-hole 341 is formed so as to penetrate through the plate 342 and the first pressurizing portion 343.

A second pressurizing portion 351 having the same shape as the piece 32 is integrally formed on the front end of the pressurizing pin 35.

The actuator 36 advances and retracts the pressurizing pin 35 and is controlled by a controller (not shown).

The pressurizing apparatus 33 retracts the pressurizing pin 35, causing the first pressurizing portion 343 and the second pressurizing portion 351 to apply a pressure from both end sides to sandwich the collet 31 and the piece 32.

Next, operation of the holding apparatus 30 will be described.

In a case of the actuator 36 not being operated, the collet 31 is not expanded due to not being pressurized, although both end sides of the piece 32 are penetrating inside of the collet 31.

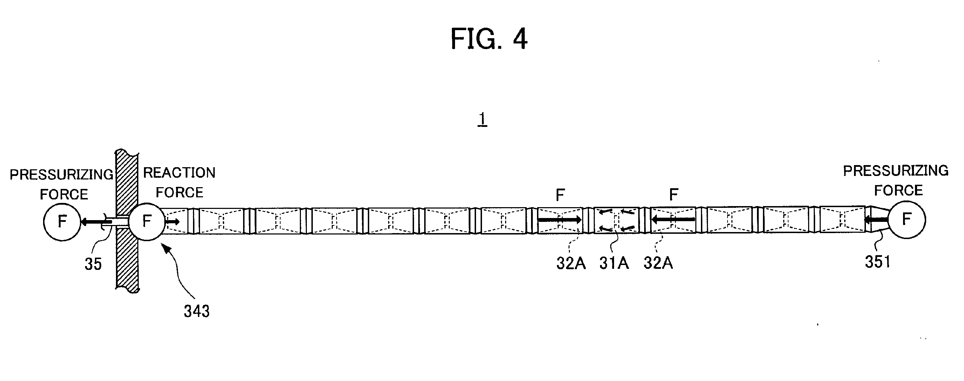

Next, as shown in Fig. 4, the actuator 36 is operated and the pressurizing pin 35 is retracted with a pressurizing force F. Then, the first pressurizing portion 343 and the second pressurizing portion 351 pressurize the collet 31 and the piece 32 with a pressurizing force F, respectively. The pressurizing force F transmits through each of the collets 31 and each of the pieces 32, and uniformly acts on all of the collets 31 and the pieces 32.

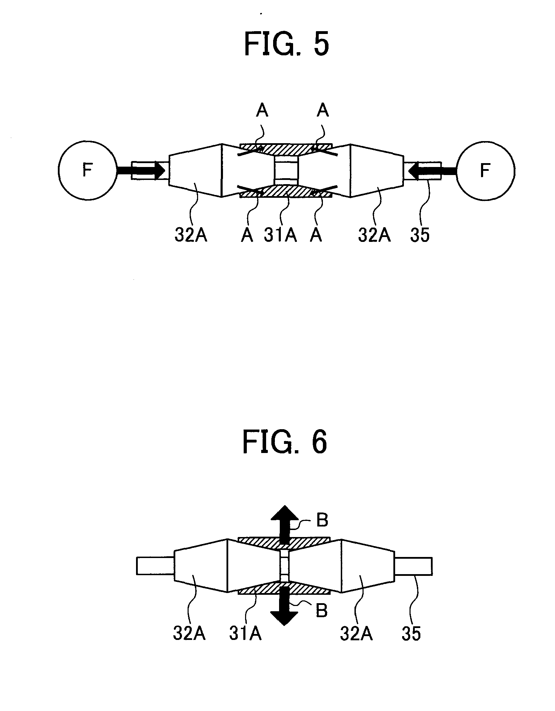

For example, in the case of describing the collet 31A in Fig. 4, each of two pieces 32A positioned on both sides of the collet 31A moves forward toward the inside of the collet 31A and a clearance between the adjacent pieces 32A to each other becomes shorter. Then, the outside diameter of the central portion of the piece 32A is larger than the inside diameter of the collet 31A and, as shown in Fig. 5, whereby an outer-peripheral surface of the piece 32A presses an inner wall surface of the collet 31A in an arrow A direction. As a result, the collet 31A is elastically deformed and, as shown in Fig. 6, the outside diameter of the collet is expanded in an arrow B direction.

Accordingly, when the holding apparatus 30 is inserted into a hole in a work and the actuator 36 is operated, the collet 31 presses an inner wall surface of the hole in the work, thereby holding the work by a frictional force between the inner wall surface of the hole in the work and an outer-peripheral surface of the collet 31.

Thereafter, when pressurization by the pressurizing apparatus 33 is released, the inner wall surface of the collet 31 presses the piece 32 by a restoring force of elastic deformation of the collet 31, so that the piece 32 retracts toward the outside of the collet 31 and the outside diameter of the collet 31 shrinks to return to the original outside diameter. Thus, a pressing force of the collet 31 against the inner wall surface of the hole in the work is released to release the work.

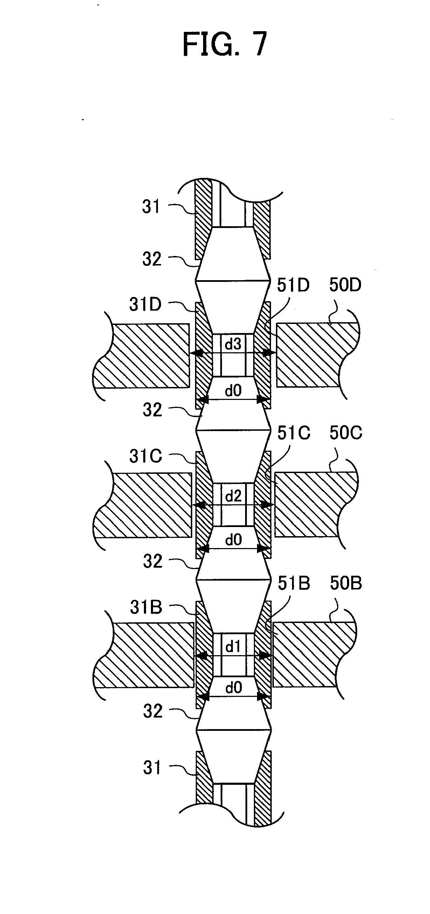

Next, operation for a case of using the holding apparatus 30 to hold the three stacked works 50B, 50c and 50D is explained while referring to Figs. 7 to 11.

The work 508 is formed with a through-hole 51B and the inside diameter of the through-hole 51B is d1. The work 50C is disposed on the work 50B and formed with a through-hole 51C. The inside diameter of the through-hole 51C is d2, which is larger than d1. The work 50D is disposed on the work 50C and a through-hole 51D is formed. The inside diameter of the through-hole 51D is d3, which is larger than d2.

As shown in Fig. 7, first, the holding apparatus 30 is controlled to dispose collets 31B, 31C, and 31D inside the through-holes 51B, 51C, and 51D of the works 50B, 50C, and 50D, respectively. In this state, the outside diameters of the collets 31B, 31C, and 31D are d0, respectively.

Next, when a pressurizing force is applied by the pressurizing apparatus 33 and the pressurizing force is increased, all of the collets 31 including the collets 31B, 31C, and 31D begin to expand at the same time.

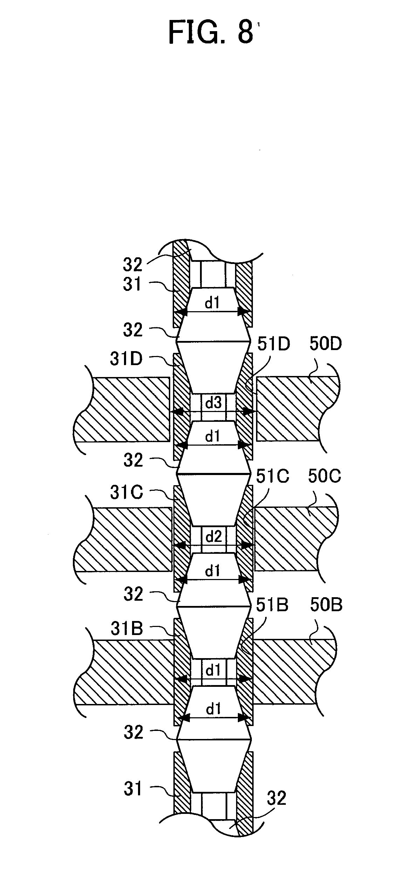

When the pressurizing force is further increased, as shown in Fig. 8, the outside diameters of all of the collets 31 are d1, respectively, and the collet 31B is made to abut an inner wall surface of the through-hole 51B in the work 50B.

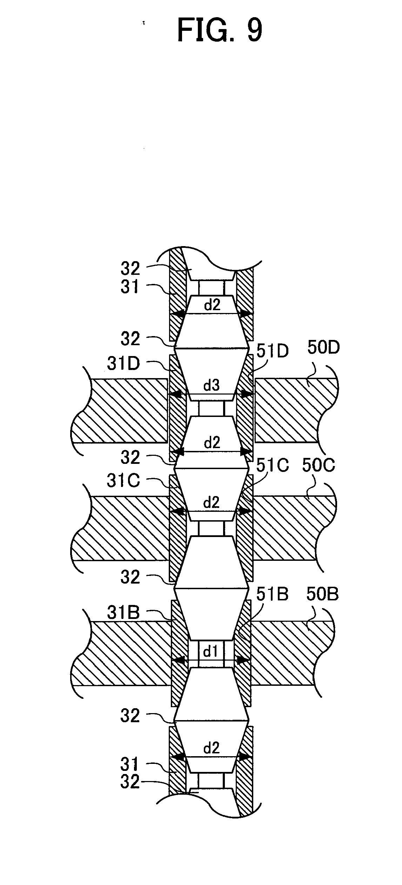

When the pressurizing force F is further increased, as shown in Fig. 9, the outside diameter of any of the remaining collets 31, other than the collet 31B, is d2 and the collet 31C is made to abut an inner wall surface of the through-hole 51C in the work 50C.

In this state, the outside diameter of the collet 31B is d1; however, a holding pressure of the collet 31B against an inner wall surface of the work 50B hardly increases. This is because any of the collets 31 other than the collet 31B is in an expandable state, and thus a pressurizing force acting on the collet 31B escapes.

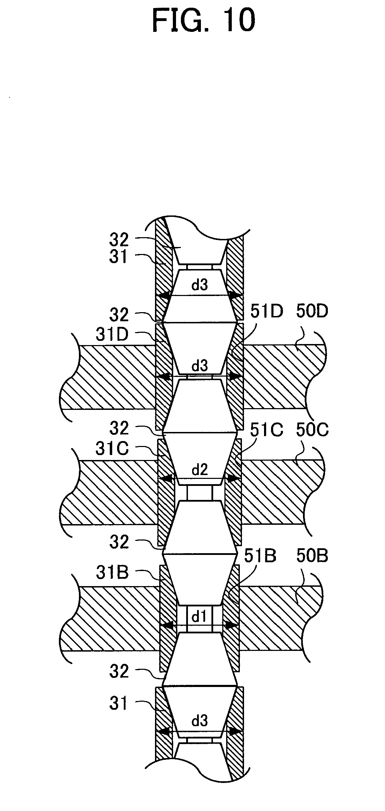

When the pressurizing force F is further increased, as shown in Fig. 10, the outside diameter of any of the remaining collets 31, other than the collets 31B and 31C, is d3 and the collet 31D is made to abut an inner wall surface of the through-hole 51D in the work 50D.

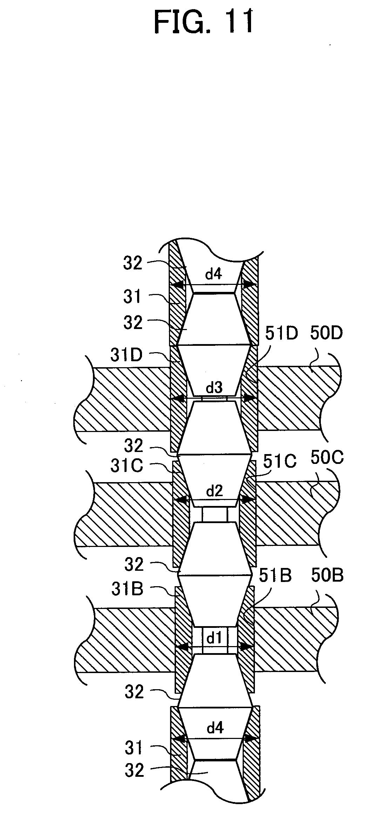

When the pressurizing force F is further increased, as shown in Fig. 11, the outside diameter of any of the remaining collets 31, other than the collets 31B, 31C, and 31D, is d4, the pieces 32 are made to abut each other, expansion stops and the holding pressures of the collets 31B, 31C, and 31D abruptly rise. At this time, since the pieces 32 are made to abut each other, even the collets 31 not used to hold the works 50B to 50D do not excessively expand.

According to the present embodiment, the following effects are attained:
(1)Since the respective collets 31 operate independently, a plurality of stacked works 50B, 50C, and 50D can be held concurrently. In addition, use of the collets 31 allows for the works 50B, 50C, and 50D to be held firmly compared to a conventional rubber tube. Further, even if the inside diameters of the through-holes 51B, 51C, and 51D in the works 50B, 50C, and 50D are different from one another, the works 50B, 50C, and 50D can be securely held, and moreover, the holding apparatus 30 is constituted of the collets 31, the pieces 32 and the pressurizing apparatus 33, thereby achieving a simple configuration and low cost. Hence, use of the work holding apparatus 30 allows for an assembly configured by stacking a plurality of components to be set up at low cost. Second Embodiment

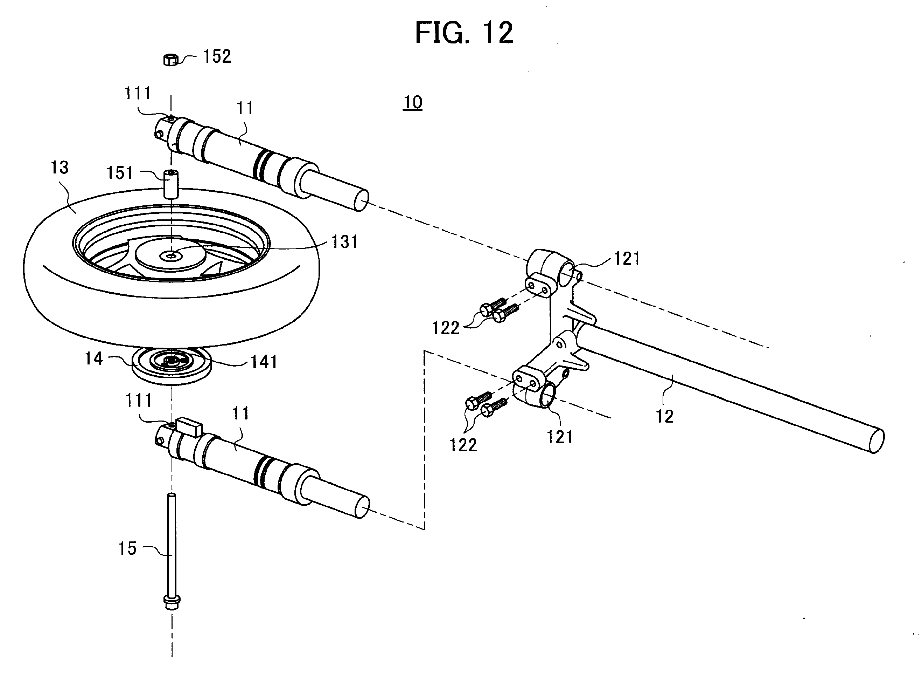

Fig. 12 is an exploded perspective view of a front fork assembly 10 set up by way of a method for setting up a front fork assembly according to a second embodiment of the present invention.

A front fork assembly 10 is a front wheel portion of a motorcycle and includes a pair of forks 11, a stem 12, a wheel 13, a brake panel 14 and an axle 15.

Each of the forks 11 is an elongated member, and is formed with an insertion hole 111 on a front end side.

The stem 12 is formed with a pair of insertion holes 121 through which the pair of forks 11 are inserted, and each of the forks 11 is inserted into an insertion hole 121 and fastened with a bolt 122 to retain both of the forks 11 to be substantially parallel.

The wheel 13 is substantially disc-shaped and an insertion hole 131 is formed in the center of the wheel 13.

The brake panel 14 is substantially disc-shaped and attached onto the wheel 13. An insertion hole 141 is formed in the center of the brake panel 14.

The wheel 13 is disposed between the pair of forks 11A and 11B in a state in which the brake panel 14 is attached thereto.

The axle 15 is inserted into each of the respective insertion holes 111, 131, and 141 of the pair of forks 11, the wheel 13 and the brake panel 14 and a cylindrical collar 151, and fastened with a nut 152 to rotatably fix the wheel 13 to the forks 11.

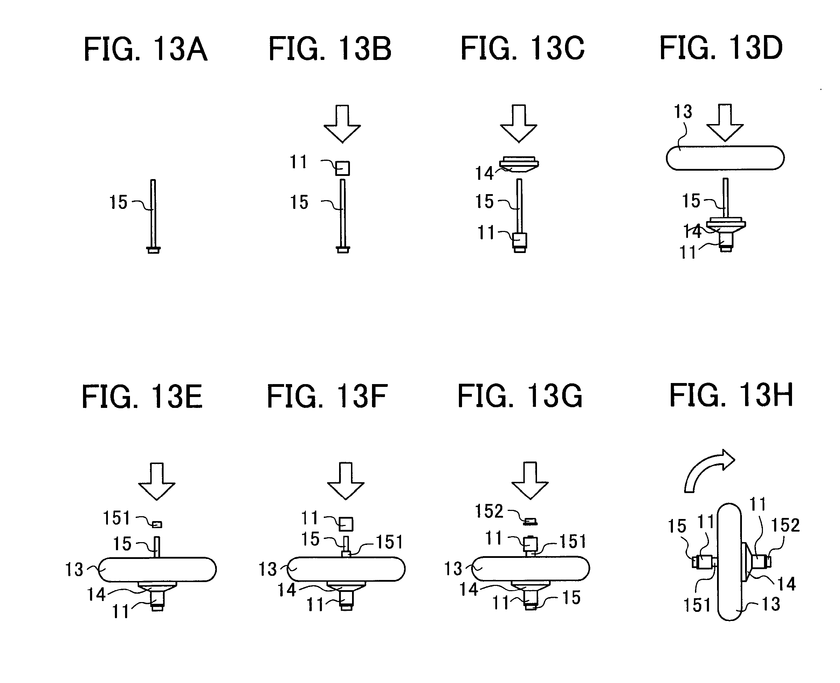

Next, a method for setting up the above-mentioned front fork assembly will be explained while referring to Figs. 13 to 15.

First, in ST1, as shown in Fig. 13A, the axle 15 is made to stand to be substantially perpendicular and, as shown in Fig. 13B, one fork 11 is conveyed in a substantially horizontal state, and the axle 15 is inserted into the one fork 11. Furthermore, the axle 15 is similarly inserted into the brake panel 14, the wheel 13 and the collar 151, as shown in Figs. 13C to 13E. Next, as shown in Fig. 13F, the axle 15 is inserted into the other fork 11 and, as shown in Fig. 13G, the leading end of the axle 15 is fastened with the nut 152 for assembly. In this way, the pair of forks 11 is disposed to be substantially parallel, and the wheel 13 is disposed between the pair of forks 11 and attached to the pair of forks 11 by the axle 15.

In ST2, these assemblies are made to stand, as shown in Fig. 13H. That is, in a state in which ST1 is finished, the axle 15 is approximately perpendicular; however, the axle 15 is made to be substantially horizontal.

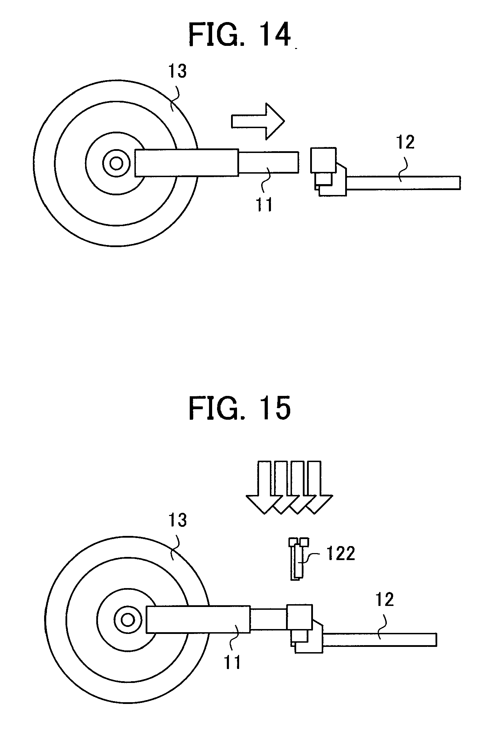

In ST3, as shown in Fig. 14, the pair of assembled forks 11 is inserted into the stem 12 and a position of the forks 11 is adjusted. In ST4, as shown in Fig. 15, the pair of forks 11 is fixed to the stem 12 by way of bolts 122.

According to the present embodiment, the following effects are attained.
(2) First, the forks 11 are disposed to be substantially parallel, and the wheel 13 is disposed between the pair of forks 11 and mounted to the forks 11 by the axle 15. Subsequently, the forks 11 are attached to the stem 12.

Accordingly, by mounting the wheel 13 to the forks 11 before attaching the forks 11 to the stem 12, a relative position between the wheel 13 and the forks 11 can be adjusted with high precision, thereby improving work efficiency.

In addition, when mounting the wheel 13 to the forks 11, since it is possible to set up by stacking in a state in which components such as the wheel 13 and the forks 11 are made to be substantially horizontal, the number of times the assembly orientation is changed can be minimized, and equipment configuration can be simplified in automating assembly work. Third Embodiment Configuration of Front Fork Assembly

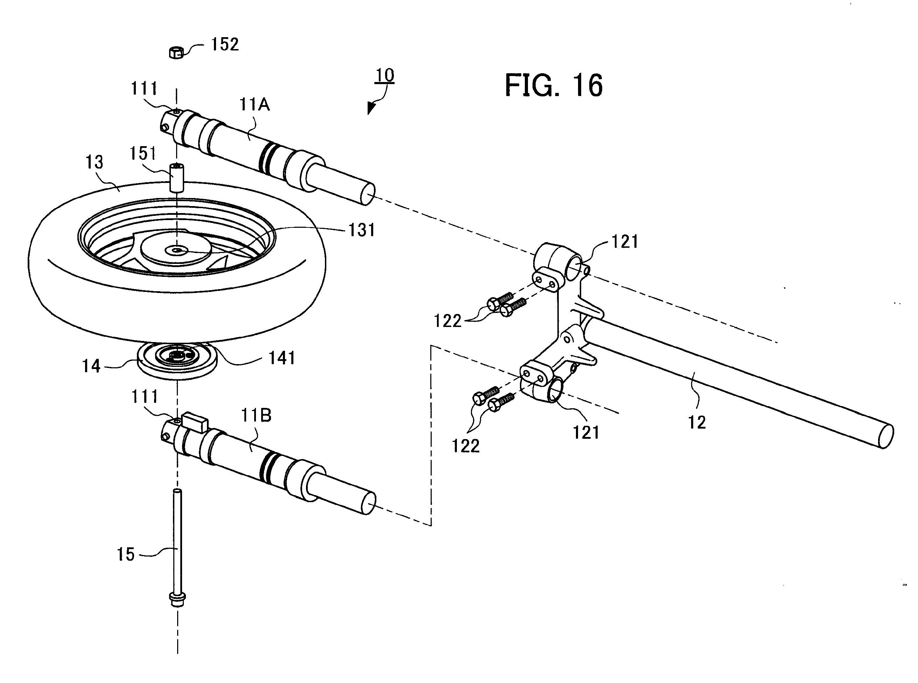

Fig. 16 is an exploded perspective view of a front fork assembly 10 set up by way of a method for setting up an assembly according to a third embodiment of the present invention.

The front fork assembly 10 is a front wheel portion of a motorcycle, and is configured to include a pair of forks 11A and 11B, a stem 12, a wheel 13, a brake panel 14 and an axle 15.

The pair of forks 11A and 11B are constituted of the right fork 11A disposed on the right side and a left fork 11B disposed on the left side, each of which is an elongated member and, on the front end side, an insertion hole 111 is formed.

The stem 12 is formed with a pair of insertion holes 121 into which the forks 11A and 11B are inserted. By inserting the forks 11A and 11B into respective insertion holes 121 and fastening the forks 11A and 11B with bolts 122, the pair of forks 11A and 11B is retained substantially in parallel.

The wheel 13 is substantially disc-shaped and an insertion hole 131 is formed in the center of the wheel 13.

The brake panel 14 is substantially disc-shaped and attached onto the wheel 13. An insertion hole 141 is formed in the center of the brake panel 14.

The wheel 13 is disposed between the pair of forks 11A and 11B in a state in which the brake panel 14 is attached thereto.

The axle 15 is inserted into each of the respective insertion holes 111, 131 and 141 of the pair of forks 11, the wheel 13 and the brake panel 14 and a cylindrical collar 151, and fastened with a nut 152 to rotatably fix the wheel 13 to the forks 11. That is, by inserting the axle 15, each of the insertion holes 111, 131 and 141 of the pair of forks 11, the wheel 13 and the brake panel 14, and the cylindrical collar 151 have a common axial center. Overall Configuration of Set-up Apparatus

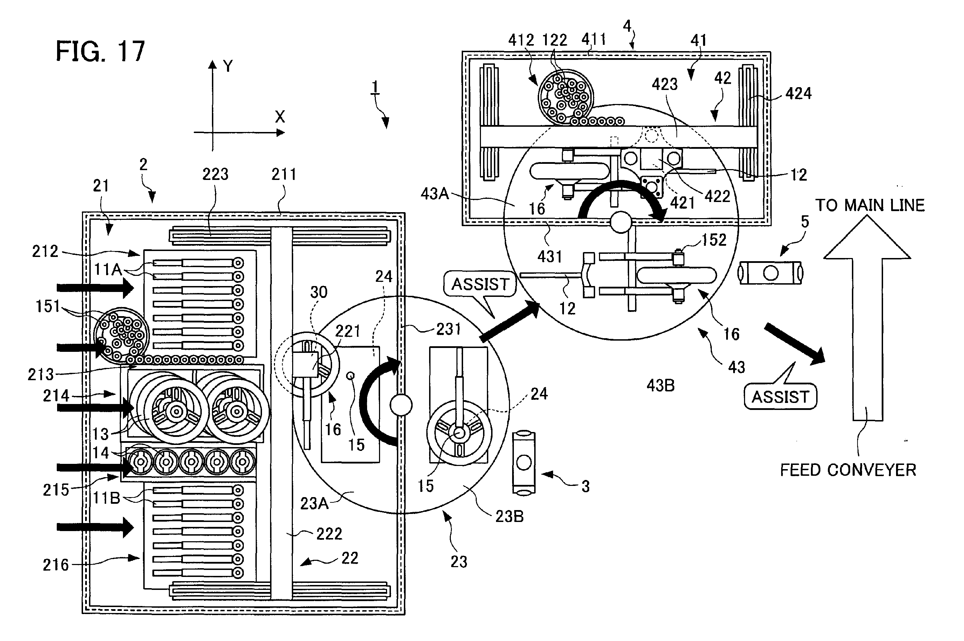

Fig. 17 is a plan view of a set-up apparatus 1 for setting up the front fork assembly 10.

The set-up apparatus 1 is provided with a first set-up apparatus 2, a control panel 3 for controlling the first set-up apparatus 2, a second set-up apparatus 4 and a control panel 5 for controlling the second set-up apparatus 4. Configuration of First Set-up Apparatus

The first set-up apparatus 2 performs assembly by sequentially stacking and holding the right fork 11A, the collar 151, the wheel 13, the brake panel 14 and the left fork 11B to form an assembly 16, and inserts the axle 15 into the assembly 16.

The first set-up apparatus 2 is provided with a rectangular table 21 surrounded by a wall portion 211, a conveyance apparatus 22 as conveyance means installed on the table 21, and a disc-shaped inversion table 23 rotatably mounted on the table 21.

On the table 21, there are provided a right fork feed area 212, a collar feed area 213, a wheel feed area 214, a brake panel feed area 215 and a left fork feed area 216 to which each of the right fork 11A, the collar 151, the wheel 13, the brake panel 14 and the left fork 11B is fed.

The conveyance apparatus 22 is provided with a holding apparatus 30, a lift mechanism 221 for moving the holding apparatus 30 up or down, a first movement mechanism 222 for moving the lift mechanism 221 in a Y-axis direction and a second movement mechanism 223 for moving the first movement mechanism 222 in an X-axis direction.

The first movement mechanism 222 and the second movement mechanism 223 can move the holding apparatus 30 over almost the entire region of the table 21, including the feed areas 212 to 216.

A specific configuration of the holding apparatus 30 will be described in detail later.

A rotational center of the inversion table 23 is positioned at an end edge of the table 21, by which a half of the inversion table 23 is disposed to overlap with a half of the table 21.

On the inversion table 23, there is provided a wall portion 231 linearly extending and passing through a rotational center thereof. The wall portion 231 partitions the inversion table 23 into a first work area 23A and a second work area 23B.

One area among the two work areas 23A and 23B (work area 23A in Fig. 17) is positioned inside of the table 21 and surrounded by the wall portion 211 of the table 21 and the wall portion 231 of the inversion table 23. At the same time, the other area among the two work areas 23A and 23B (work area 23B in Fig. 17) is positioned outside of the table 21 and surrounded by the wall portion 211 of the table 21 and the wall portion 231 of the inversion table 23.

Each of the first work area 23A and the second work area 23B is provided with an axle lift mechanism 24.

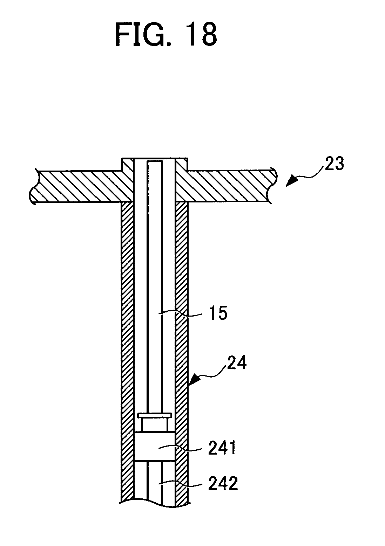

Fig. 18 is a sectional view of the axle lifting mechanism 24.

The axle lifting mechanism 24 is provided with a chuck 241 for holding an axle 15 so that a central axis thereof is substantially perpendicular and a lift mechanism 242 for lifting the chuck 241. With the axle lift mechanism 24, an axle 15 can be held by the chuck 241 and can be further raised along an axial direction protruding from a surface of the inversion table 23 by driving the lift mechanism 242. Configuration of Holding Apparatus

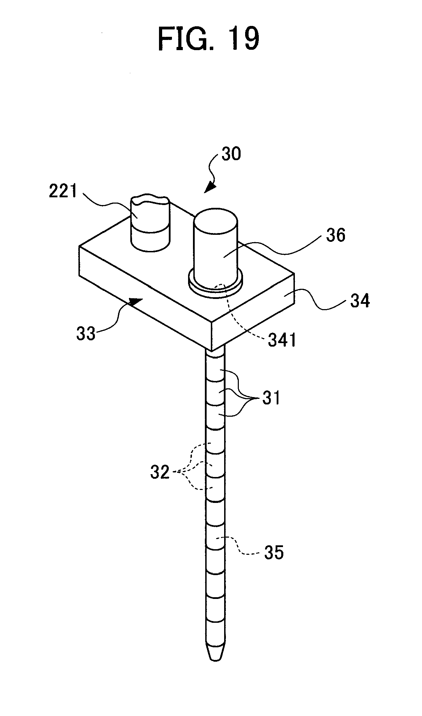

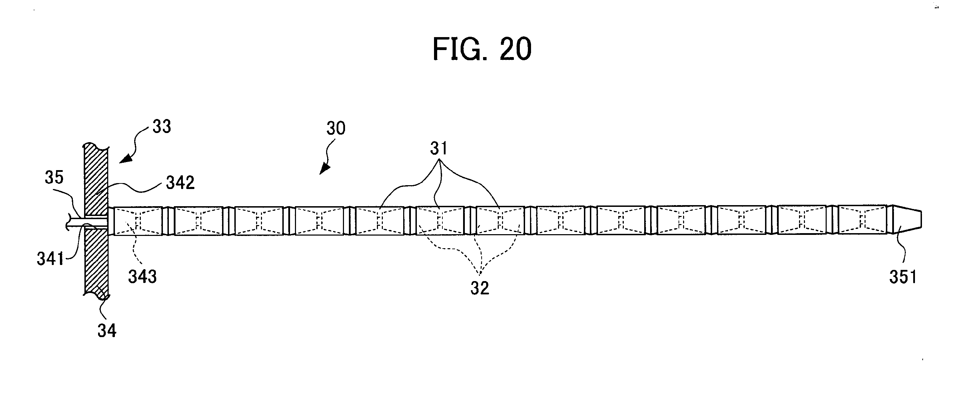

Fig. 19 is a perspective view showing a schematic configuration of the holding apparatus 30. Fig. 20 is a side view of the holding apparatus.

The holding apparatus 30 is provided with a plurality of collets 31 of cylindrical shape arranged in a row, a plurality of pieces 32 of cylindrical shape arranged between a plurality of collets 31, and a pressurizing apparatus 33 that applies a pressure from both end sides to sandwich the collets 31 and the pieces 32.

The plurality of collets 31 are arranged so that central axes thereof are coaxial and the pieces 32 are arranged between the collets 31 so that the central axes thereof are coaxial to the collets 31. That is, the collets 31 and the pieces 32 are alternately arranged in line.

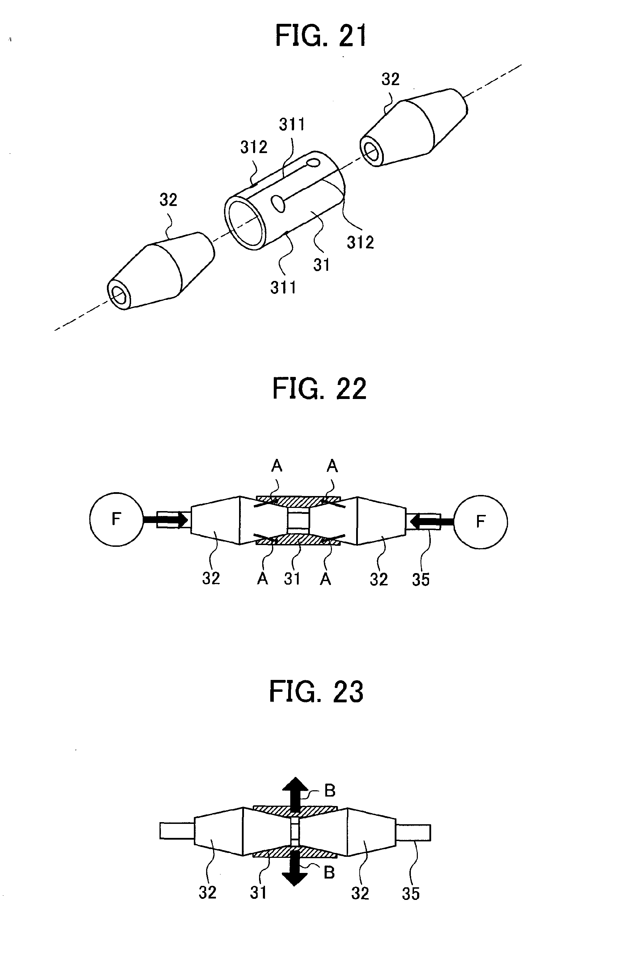

Fig. 21 is an exploded perspective view of a part of the holding apparatus 30.

Slits 311 from the vicinity of one end edge to the other end edge and slits 312 from the vicinity of the other end edge to one end edge are alternately formed in the collets 31.

The outside diameter of the piece 32 is larger than the inside diameter of the collet 31 in the center, becomes smaller from the center thereof toward both ends, and is smaller than the inside diameter of the collet 31 at both ends. Because both ends of the piece 32 are smaller than the inside diameter of the collet 31, both ends of the piece 32 are in such a state as to penetrate inside the collet 31.

Again referring to Figs. 19 and 20, the pressurizing apparatus 33 is provided with a holding flange 34 supported by the lift mechanism 221 and formed with a through-hole 341, a collet 31 inserted into the through-hole 341, a pressurizing pin 35 inserted into the piece 32, and an actuator 36 mounted on the holding flange 34 and advancing/retracting the pressurizing pin 35.

The holding flange 34 is provided with a flat plate 342 and a first pressurizing portion 343 integrally formed in the center of the plate 342. The first pressurizing portion 343 has the shape of half of the piece 32. That is, the outside diameter of the first pressurizing portion 343 is larger than the inside diameter of the collet 31 on the plate 243 side, becomes smaller toward the front end portion, and is smaller than the inside diameter of the collet 31 at the front end portion.

The through-hole 341 is formed so as to penetrate through the plate 342 and the first pressurizing portion 343.

A second pressurizing portion 351 having the same shape as the piece 32 is integrally formed on the front end of the pressurizing pin 35.

The actuator 36 advances and retracts the pressurizing pin 35 and is controlled by the controller 3 described above.

The pressurizing apparatus 33 retracts the pressurizing pin 35, causing the first pressurizing portion 343 and the second pressurizing portion 351 to apply pressure from both end sides to sandwich the collet 31 and the piece 32.

Next, operation of the holding apparatus 30 will be described. In a case of the actuator 36 not being operated, the collet 31 is not expanded due to not being pressurized, although both end sides of the pieces 32 are penetrating inside of the collets 31.

Next, the actuator 36 is operated and the pressurizing pin 35 is retracted with a pressurizing force F. Then, the first pressurizing portion 343 and the second pressurizing portion 351 pressurize the collet 31 and the piece 32 with a pressurizing force F, respectively. The pressurizing force F transmits through each of the collets 31 and each of the pieces 32, and uniformly acts on all of the collets 31 and the pieces 32.

For example, when explaining a particular collet 31, each of two pieces 32 positioned on both sides of the collet 31 moves forward toward the inside of the collet 31 and a clearance between the adjacent pieces 32 to each other becomes shorter. Then, the outside diameter of the central portion of the piece 32 is larger than the inside diameter of the collet 31 and, as shown in Fig. 22, whereby an outer-peripheral surface of the piece 32 presses an inner wall surface of the collet 31 in an arrow A direction. As a result, the collet 31 is elastically deformed and, as shown in Fig. 23, the outside diameter of the collet is expanded in an arrow B direction.

Thereafter, when pressurization by the pressurizing apparatus 33 is released, the inner wall surface of the collet 31 presses the piece 32 by a restoring force of elastic deformation of the collet 31, so that the piece 32 retracts toward the outside of the collet 31 and the outside diameter of the collet 31 shrinks to return to the original outside diameter.

The operation of the first set-up apparatus 2 will be described below.

By driving the conveyance apparatus 22, the right fork 11A, the collar 151, the wheel 13, the brake panel 14 and the left fork 11B are stacked and held by the holding apparatus 30 in this order to perform assembly.

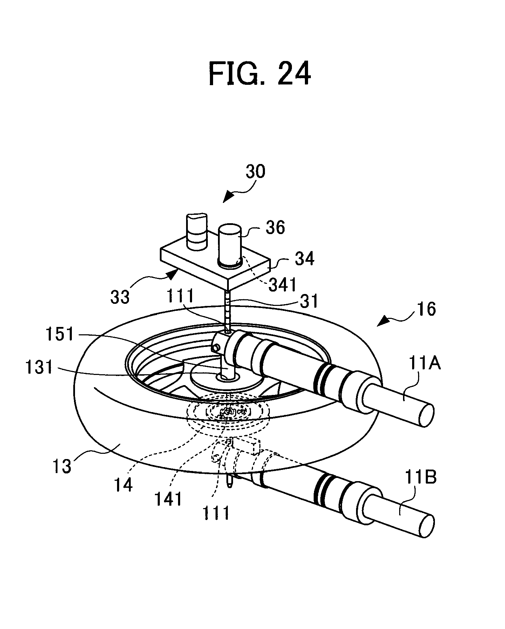

More specifically, as shown in Fig. 24, the holding apparatus 30 is inserted into the insertion holes 111, 131 and 141 of the right fork 11A, the wheel 13, the brake panel 14, and the right fork 11B, and the collar 151, and then the pressurizing apparatus 33 is operated. Then, the collets 31 press the insertion holes 111, 131 and 141, and an inner wall surface of the collar 151 and, while the insertion holes 111, 131 and 141 and the collar 151 are being retained to be coaxial, so that the components 11A, 11B and 13 and 14 are held by a frictional force.

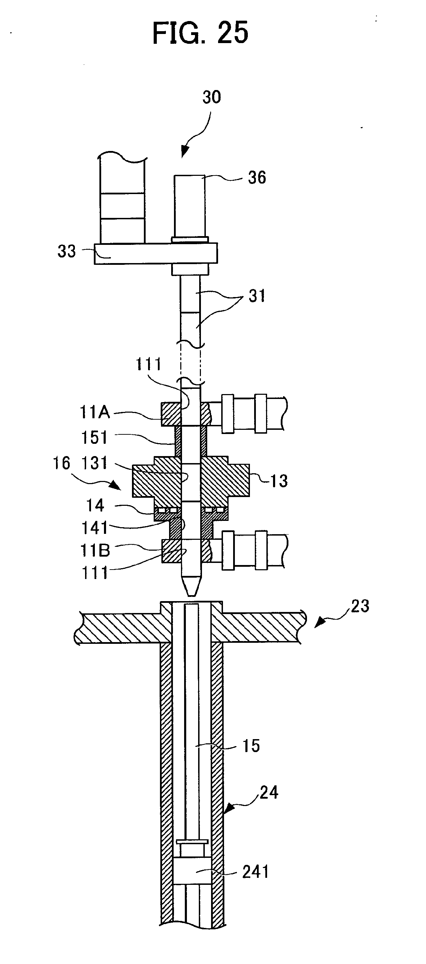

Next, as shown in Fig. 25, in a state in which the assembly 16 is held, the holding apparatus 30 is moved onto the inversion table 23, which is disposed to overlap the table 21, and then the right fork 11A, the collar 151, the wheel 13, the brake panel 14 and the left fork 11B are placed thereon, in a state where they are being stacked.

Next, when pressurization by the pressurizing apparatus 33 is released, pressing forces of the collets 31 against the insertion holes 111, 131 and 141 and the inner wall surface of the collar 151 are released, and the assembly 16 is placed and held on the inversion table 23.

Subsequently, the axle 15 is moved forward toward the holding apparatus 30. That is, the axle 15 is raised. Then, the front end of the axle 15 is inserted into the assembly 16, and abuts the front end of the holding apparatus 30.

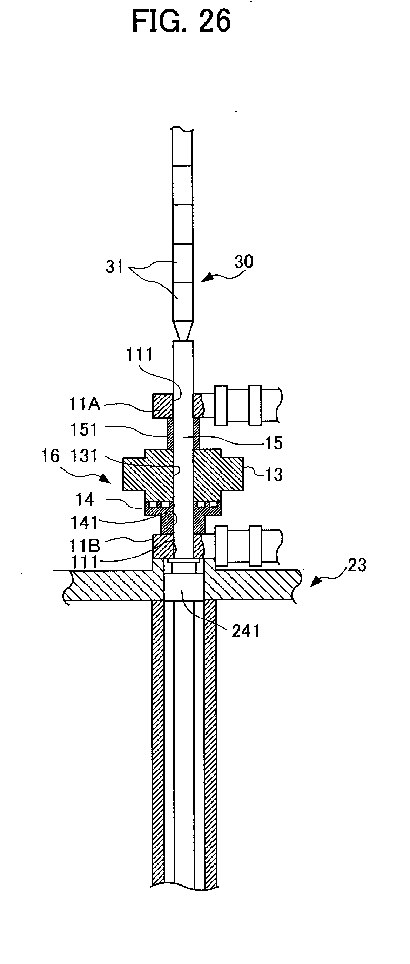

Subsequently, as shown in Fig. 26, while the holding apparatus 30 is being maintained to be slidable upward, and contact of the axle 15 with the holding apparatus 30 is being maintained, the axle 15 is raised so as to be pushed up.

In this way, the holding apparatus 30 is separated from the assembly 16, and the axle 15 is inserted into the insertion holes 111, 131 and 141 of the assembly 16 and the collar 151.

In the first set-up apparatus 2 described above, a worker performs work in the following sequence.

Again referring to Fig. 17, first, in one of two work areas 23A and 23B, the axle 15 is set at the axle lift mechanism 24, and the inversion table 23 is inverted. Then, one of the work areas 23A and 23B is positioned inside the table 21. When the assembly 16 is conveyed by the conveyance apparatus 22, the axle 15 is inserted into the assembly 16 by the axle lift mechanism 24.

At this time, the other of the two work areas 23A and 23B is positioned outside of the table 21, and thus another axle 15 is set at the axle lift mechanism 24.

Next, the inversion table 23 is inverted again, and one of the two work areas 23A and 23B is positioned outside the table 21. In the one work area, since the assembly 16 in which the axle 15 is inserted is placed and held, the worker conveys the assembly 16 in which the axle 15 is inserted to the second set-up apparatus 4, by way of an assist apparatus of the conveyance apparatus (not shown).

At this time, since the other of the two work areas 23A and 23B is positioned inside the table 21, the next assembly 16 is placed and held by the conveyance apparatus 22. Configuration of Second Set-up Apparatus

For the assembly 16 conveyed from the first set-up apparatus 2, when the worker temporarily fits the nut 152 to the axle 15 and sets the stem 12, the second set-up apparatus 4 fastens the forks 11A and 11B of the assembly 16 in the stem 12 with the bolts 122, thereby setting up a front fork assembly.

The second set-up apparatus 4 includes a rectangular table 41 surrounded by a wall portion 411, a bolt fastening apparatus 42 installed on the table 41 and a disc-shaped inversion table 43 rotatably attached to the table 41.

On the table 41, there is provided a bolt feed area 412 to which the bolts 122 are fed.

The bolt fastening apparatus 42 includes a fastening apparatus 421 for holding and fastening the bolts 122, a lift mechanism 422 for moving the fastening apparatus 421 up or down, a first movement mechanism 423 for moving the lift mechanism 422 in an X-axis direction and a second movement mechanism 424 for moving the first movement mechanism 423 in a Y-axis direction.

Using the first movement mechanism 423 and the second movement mechanism 424, the fastening apparatus 421 can be moved over substantially the entire range of the table 41 including the bolt feed area 412.

A rotational center of the inversion table 43 is positioned at an end edge of the table 41, and thus a half of the inversion table 43 is disposed to overlap with a half of the table 41.

On the inversion table 43, there is provided a wall portion 431 linearly extending and passing through the rotational center. The wall portion 431 partitions the inversion table 43 into a first work area 43A and a second work area 43B.

One of the two work areas 43A and 43B (work area 43A in Fig. 17) is positioned inside of the table 41 and surrounded by the wall portion 411 of the table 41 and the wall portion 431 of the inversion table 43. At the same time, the other of the two work areas 43A and 43B (work area 43B in Fig. 17) is positioned outside of the table 41 and surrounded by the wall portion 411 of the table 41 and the wall portion 431 of the inversion table 43.

In the second set-up apparatus 4, the worker performs work in the following sequence.

First, in one of the two work areas 43A and 43B, the first set-up apparatus 2 conveys the assembly 16 into which the axle 15 is inserted.

The worker sets the stem 12, temporarily fits a nut 152 to the axle 15, and inverts the inversion table 43. Then, one of the two work areas 43A and 43B is positioned inside of the table 41. Next, the bolt 122 is fitted and then fastened to the stem 12 by the bolt fastening apparatus 42. In this way, the front fork assembly 10 is completed.

At this time, since the other of the two work areas 43A and 43B is positioned outside of the table 41, the next assembly 16 and stem 12 are preset.

Next, the inversion table 43 is inverted again, and one of the two work areas 43A and 43B is positioned outside the table 41. Since the assembly 16 placed and held in the one work area has been already completed, the worker conveys the completed front fork assembly 10 to a feed conveyer and delivers the assembly to a main line by way of an assist device of a conveyance apparatus (not shown).

At this time, the other of the two work areas 43A and 43B is positioned inside the table 41. Accordingly, the bolt fastening apparatus 42 fits the bolt 122 onto the next assembly 16.

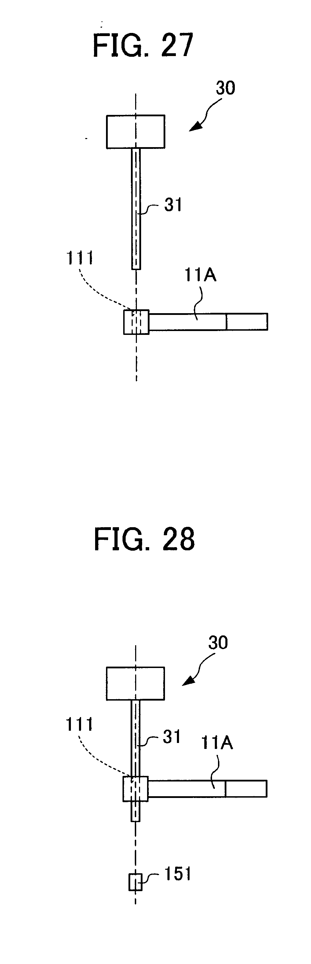

Next, a method for setting up the front fork assembly 10 will be explained while referring to Figs. 27 to 34.

First, as shown in Fig. 27, the holding apparatus 30 is moved to a right fork feed area 212 (refer to Fig. 17), the collet 31 of the holding apparatus 30 is inserted into the insertion hole 111 of the right fork 11A, and the right fork 11A is held.

Next, as shown in Fig. 28, the holding apparatus 30 is moved to the collar feed area 213 (refer to Fig. 17), and a right fork 11A is stacked onto the collar 151. Subsequently, the holding apparatus 30 is inserted into the collar 151 in addition to the right fork 11A, so that the right fork 11A and the collar 151 are held. In this state, the insertion hole 111 of the right fork 11A and the collar 151 are positioned coaxially.

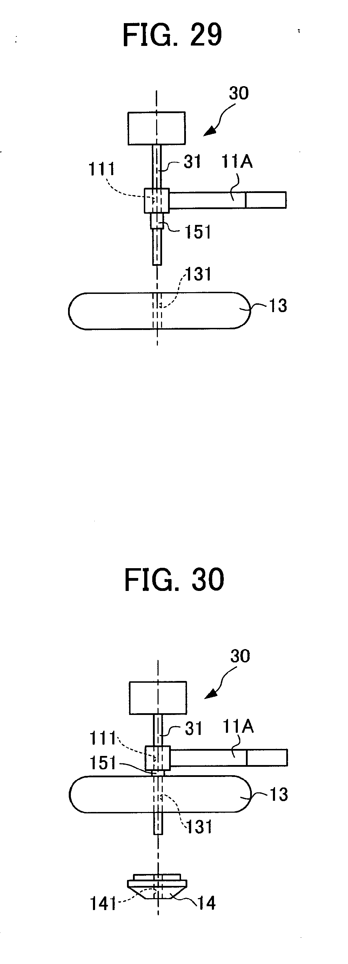

Next, as shown in Fig. 29, the holding apparatus 30 is moved to a wheel feed area 214 (refer to Fig. 17), and the right fork 11A and the collar 151 are stacked onto the wheel 13. Subsequently, the holding apparatus 30 is also inserted in the wheel 13 in addition to the right fork 11A and the collar 151, so that the right fork 11A, the collar 151 and the wheel 13 are held. In this state, the insertion hole 111 in the right fork 11A, the collar 151 and the insertion hole 131 of the wheel 13 are positioned coaxially.

Next, as shown in Fig. 30, the holding apparatus 30 is moved to a brake panel feed area 215 (refer to Fig. 17), and the right fork 11A, the collar 151 and the wheel 13 are stacked onto the brake panel 14. Subsequently, the holding apparatus 30 is inserted into the brake panel 14 in addition to the right fork 11A, the collar 151 and the wheel 13, so that the right fork 11A, the collar 151, the wheel 13 and the brake panel 14 are held. In this state, the insertion hole 111 of the right fork 11A, the collar 151, the insertion hole 131 of the wheel 13, and the insertion hole 141 of the brake panel 14 are positioned coaxially.

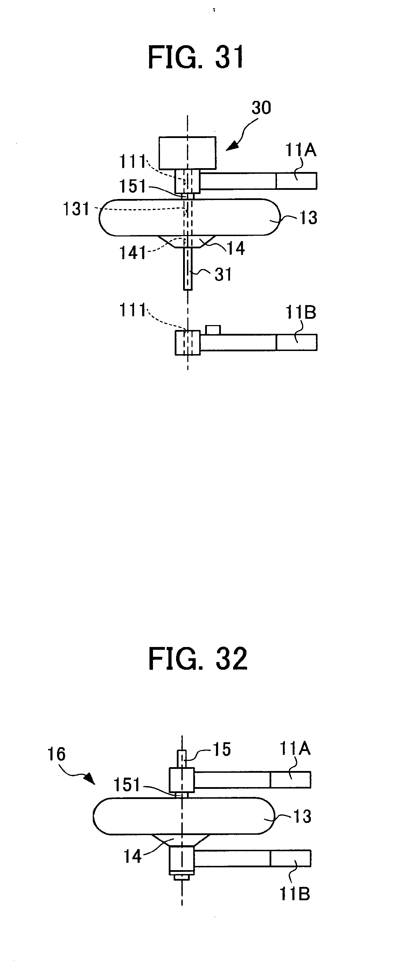

Next, as shown in Fig. 31, the holding apparatus 30 is moved to a left fork feed area 216 (refer to Fig. 17), and the right fork 11A, the collar 151, the wheel 13 and the brake panel 14 are stacked onto the left fork 11B. Subsequently, the holding apparatus 30 is also inserted into the left fork 11B in addition to the right fork 11A, the collar 151, the wheel 13, and the brake panel 14, so that the right fork 11A, the collar 151, the wheel, 13, the brake panel 14, and the left fork 11B are held for assembly. In this state, the insertion hole 111 of the right fork 11A, the collar 151 and the insertion hole 131 of the wheel 13, the insertion hole 141 of the brake panel 14, and the insertion hole 111 of the left fork 11B are positioned coaxially.

Next, as shown in Fig. 32, the assembly 16 is placed on the inversion table 23 (refer to Fig. 17), and the axle 15 is inserted into the assembly 16.

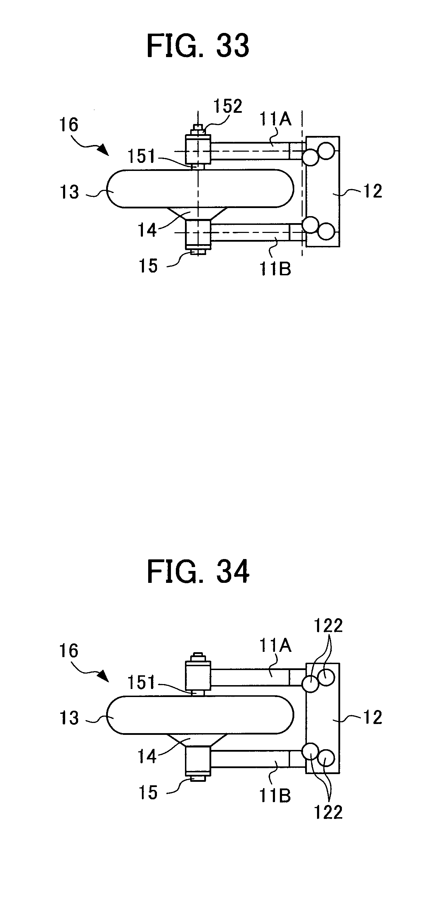

Next, the inversion table 23 is inverted, and the assembly 16 into which the axle 15 is inserted is removed. Subsequently, the assembly 16 is conveyed onto the inversion table 43 (refer to Fig. 17) of the second set-up apparatus 4 and, as shown in Fig. 33, a nut 152 is fastened to the front end of the axle 15, and a stem 12 is attached thereto.

Next, as shown in Fig. 34, the bolt 122 is fastened to the stem 12 by way of the bolt fastening apparatus 42 (refer to Fig. 17) of the second set-up apparatus 4, to complete the front fork assembly 10.

According to the present embodiment, the following effects are attained.
(3)With the conveyance apparatus 22, the right fork 11A positioned at the top stage is held. Next, using the conveyance apparatus 22, the collar 151 is held in a state where the right fork 11A is held. Next, using the conveyance apparatus 22, the wheel 13 is held in a state where from the right fork 11A to the collar 151 are held. Next, using the conveyance apparatus 22, the brake panel 14 is held in a state where from the right fork 11A to the wheel 13 are held. Subsequently, using the conveyance apparatus 22, the left fork 11B is held in a state where from the right fork 11A to the brake panel 14 are held.

Accordingly, by only moving the conveyance apparatus 22 in the order of the right fork 11A, the collar 151, the wheel 13, the brake panel 14 and the left fork 11B, set-up states of the front fork assembly 10 are sequentially achieved so that the front fork assembly 10 can be set up. Accordingly, use of conventional equipment for mutually positioning a set-up station and components can be eliminated and set-up can be executed with one conveyance means, thereby attaining cost reduction and effective space utilization.
(4)Although, the right fork 11A, the collar 151, the wheel 13, the brake panel 14 and the left fork 11B, which constitute components of the front fork assembly 10, are quite different in size and shape according to a machine type, it is possible to easily deal with changes in machine type by holding by way of the holding apparatus 30 with the insertion holes 111, 131, and 141 and the collar 151 as references.

It should be noted that the present invention is not limited to the embodiments described above, and includes any and all modifications, variations or equivalent arrangements which may be intended to be within the spirit and scope of the present invention.

For example, in the second embodiment, the front end of the axle 15 is fastened with the nut 152 (ST1); however, this fastening may be made in a regularly or temporarily fastened manner. In the case of temporarily fastening the nut 152, after adjustment of a relative position between the fork 11 and the stem 12, and the fork 11 is fixed onto the stem 12, regular fastening is performed (ST4).

## Claims

1. A work holding apparatus comprising:
a plurality of collets of cylindrical shape arranged in a row;
a plurality of pieces of cylindrical shape arranged between the plurality of collets; and
a pressurizing means that is inserted into the plurality of collets and the plurality of pieces, and that applies pressure from both end sides thereof to sandwich the collets and the pieces,
wherein the outside diameter of the piece is larger than the inside diameter of the collet in the center, becomes smaller from the center thereof toward both ends, and is smaller than the inside diameter of the collet at both ends.

2. A method for setting up a front fork assembly having a pair of forks, a stem for fixing the pair of forks to be substantially parallel, a wheel to be disposed between the pair of forks, and an axle for rotatably mounting the wheel on the fork, the method comprising:
a step of disposing the pair of forks to be substantially parallel, while disposing a wheel between the pair of forks, and mounting the wheel on the pair of forks by the axle; and
a step of mounting the pair of forks to the stem.

3. A method for setting up an assembly configured by stacking from a first component positioned at a top stage to an (n)th component positioned at a bottom stage, n being an integer of at least 2, the method comprising:
a first step of holding a first component by way of a conveyance means; and
an (m)th step of holding a m-th component in a state where the first to (m-1)th components are held by way of the conveyance means, m being an integer of at least 2,
wherein set-up states of the assembly are achieved in sequence by repeating the (m)th step until (m) changes from a value of 2 to be equal to (n).
